**Europäisches Patentamt**

**European Patent Office**

**Office européen des brevets**

(19)

(11) Publication number: **0 033 997**
**A1**

(12) # EUROPEAN PATENT APPLICATION

(21) Application number: **81200159.2**

(22) Date of filing: **09.02.81**

(51) Int. Cl.³: **C 09 K 17/00**

---

(30) Priority: **08.02.80 NL 8000798**

(43) Date of publication of application: **19.08.81**
**Bulletin 81/33**

(84) Designated Contracting States: **AT BE CH DE FR GB IT LI LU NL SE**

(71) Applicant: **Heidemaatschappij Beheer N.V., No. 1, Lovinklaan, NL-6821 HX Arnhem (NL)**

(72) Inventor: **Bertels, Augustinus Wilhelminus M., No. 10, Van Westhreenelaan, NL-6815 AC Arnhem (NL)**

(74) Representative: **Schumann, Bernard Herman Johan et al, OCTROOIBUREAU ARNOLD & SIEDSMA Sweelinckplein 1, NL-2517 GK The Hague (NL)**

---

(54) **Method of enhancing the load resistibility of ground material.**

(57) The invention relates to a method of enhancing the load resistibility of ground material containing loose elements such as grains and/or fibres in which method a stabilizing agent comprises cellulose derivatives in the dissolved state to form at least partly by curing a cell structure with walls of film-like stabilisation material and cells enclosing the loose elements.

EP 0 033 997 A1

0033997

-1-

Short title: Method of enhancing the load resistibility
              of ground material
--------------------------------------------------------------

          The invention relates to a method of enhancing the load resistibility of ground material containing
loose elements such as grains and/or fibres, in which
method a stabilizing agent is mixed with said material.
The term "ground material" is to be understood to mean
herein any material or mixture of materials susceptible
of operating as a carrier or a construction stiffening means
in public and/or civil constructions (road constructions
and hydraulic engineering).
          There is known a method in which a stabilizing agent such as cement or asphalt is used. This
known method ensues from research intended to improve
the properties of load  resistance of mixtures of gravel,
sand, clay, refuse (for example combustion dust, cinders,
blast-furnace slags, incineration slags, domestic refuse)
humus and/or peat, particularly in order to improve said
load properties for the construction of footpaths, roads wet and dry tali or beds, dike bodies, sporting grounds and industrial sites.

There are furthermore known methods for inhibiting erosions, for example, by using synthetic fibre mats and films, carboxy-methyl-cellulose (CMC), hydrolysed polyacrylonitrile (HPA) and cellulose-xanthogenate. In this way a temperorary increase in cohesion of the top layer of the ground is obtained.

Sand-cement mixtures have been used on a large scale in road constructions, since they ensure a good quality of the substructure of the road pavement, be it under the highly limiting condition that the sand employed should be free of humus. In this way the stability of clay ground and of mixtures of sand and clay can slo also be improved. To this end, however, larger amounts of cement are required. For the frequently occurring situations in which sand bodies comprise an amount of humus the possibilities of stabilisation have so far been limited.

It is furthermore known that in general sand-cement mixtures require relatively lond solidifying or curing times (about one week to one month), so that in constructing a road body from the subsoil to the upper cover (asphalt concrete, cement concrete and so on) a given delay has always to be taken into account. Moreover, shrinkage and consequent cracks have to be considered.

The former research using synthetic substances such as CMC, HPA and cellulose-xanthogenate aimed at an increase in erosion resistance particularly against wind and water by enhancing the shear resistance of the ground/ additive mixture. It has been found that the resultant increase in erosion resistance diminished in the course of ime, for example, due to the natural decomposition of the additive. An essential, lasting stabilisation in which the load resistibility of the ground layer is enhances by several orders, for example, comparable with the stabilisation obtainable by sand-cement was not obtained.

An additional and extremely serious problem resides in that a potential ground solidifying agent must not reduce the possibility of consolidation in situ by mechanic roller methods, since the degree of ground consolidation is correlated to the resistance to fracture by frost. An increased degree of consolidation improves in general the resistance to climatic influences. The consolidation is optimized in accordance with conventional, known standards in dependence upon the moisture content of the ground, the kind of soil and the requirements in practice. The optimum moisture content is a determinable magnitude. Beyond this optimum, i.e. at an excessively high moisture content, the possibility of consolidation of the ground decreases dissipating into a quick sand-like state.

Very resilient additives, for example, of grain-separating, prefabricated fibres, films, mats or strands impede consolidation and, therefore, cannot be used for substantial stabilisation. Furthermore, materials and mixtures of materials exhibitin drastic chemico-physical post-shrinkage phenomena have to be evaluated with respect to usability on account of the potential formation of cracks.

The invention has for its object to provide possibilities of enhancing the load resistibility of a ground material body whilst avoiding the restrictions and problems involved in the methods known in this respect.

Therefore, the invention provides a method of the kind set forth in which the stabilizing agent comprises cellulose derivatives in a dissolved state to form at least partly by curing a cell structure having walls of film-shaped stabilisation material and cells enclosing the loose elements. During any consolidation the stabilizing agent still being in the dissolved state will not hinder grain contact, even with a consolidation energy remaining the same an increased consolidation can be obtained by the lubricating effect of the viscous additive.

0033997

Advantageous is that method according to the invention in which the finally resulting mixture ratio between the ground material and teh cellulose derivatives is at least of the order of magnitude of 500 : 1. From this ratio it appears that a comparatively very low percentage of additive will be sufficient.

In the method according to the invention the layer formed can be mechanically consolidated.

It is advantageous to add to the cellulose derivatives substances accelerating the stiffening effect.

To the cellulose derivatives may furthermore be added substances forming polymer structures.

A further possibility resides in that substances enhancing the chemical and microbiological stability are added to the cellulose derivatives.

An advantageous variant of the method according to the invention is that in which the additives are of the three-dimensionally bonding type. In this case the additvies may be selected from the group of cyanuric chloride, formaldehyde, derivatives of cyanuric chloride, isohydroxyl-ethylene, distyrene-triazine.

For further illustration and for a good understanding of the invention the following should be noted: the substances and structures mentioned in this description are formed by a complex of cellulose derivative polymers, which have the following advantages.

-They can be used on ground material in general and hence also on ground material having a high percentage of humus or other impurities and bacterially active substances such as sewer sludge.

-In principle they can be used on kinds of ground containing a high amount of water.

-An accelerated production is possible under variable weather conditions.

-They van be produces with interesting economic results from natural starting materials, refurse or recycling products having an appreciable content of cellulose on the one hand and organic acids, bases and salts on the other hand occurring, for example, also in urine and faeces (in this respect it may be interesting for developing countries).

-Higher concentrations can result in a real tensile strength.

The cellulose dericatives are mixed in the dissolved state with the ground by conventional means. The relative net dry content of additives is lower or even much lower than 5% and by way of illustration it is noted that considerably higher percentages have to be used in teh case of sand-cement. According to the invention by mechanical consolidation and/or by a series of accelerating and/or structure-forming additives a continual, spacial, film-like polymer network is formed in the interstices between the grains, humus fibres and/or clay particles, it being noted here that said loose elements may be in contact with one another. In dependence upon the desired degreee of density a usually low percentage of fluid as an admixture will be sufficient. The solvent and redundant moisture escape by diffusion and evaporation at the surface, by diffusion in adjacent layers of material or they are chemically/physically bonded to part of the structure substances and accelerators added to the solution. In this case a continual, film-like network of solid polymers is obtained, which will exhibit inter alia an enhanced pressure strength , particularly by the encapsulation of sand grains and other parts of the ground material. It is highly important that in fact a film-like network should be obtianed rather than a formation of fibres and filaments, which would certainly not bring about a stabilisation of any importance.

As stated above a series of additives is intended to guarantee chemical and microbiological stability of the cellulose derivatives. The above-mentioned three-dimensionally linking substances and other additives providing molecular transverse bonds provide, moreover, the advantage of a reduction of the moisture absorption of the cellulose derivative. Thus the mechnical strength in a wet state is improved.

It should be noted in this regard that the polymerisation process of natural basic substances is partly carried out by the action of acids contained in the ground, for example, fulvic acid. Otherwise the strong mechanical consolidation enhances the extraction of the solvent by capillary and adsorption effects so that the degree of coagulation increases to critical values i.e. values above which polymerisation occurs, which results in film formation with a uniform degree of consolidation.

Although in some cases special measures of consolidation such as rolling, vibrating and/or ramming have to be taken, this is not always necessary as will be seen from the following survey of potential uses of the invention with the corresponding particularities, given by way of orientation.

1) Cellulose solutio for casting, pouring, and spraying (also beneath the water surface) with a relatively high net percentage of cellulose (in the order of, for example, 2 to 3%) without mechanical consolidation. Uses, for example, dike foot, embankment, talus, filling of cracks, hollow spaces.

2) Infiltration processes with high/low pressure combinations in comparatively porous ground mixtures with very thin-liquid cellulose derivative solutions with ma ground material, if necessary, followed by post-consolidation.

3) Injection technique of mixtures for reinforcing, for example, porous, deeper ground layers (for example, foundations), for examples, for repairing subsidences.

4) A preferential heat technique may be applied in which curing and reinforcing are accelerated by local, comparatively slight increase in temperature up to about $40^{O}$C. Suitable for use radiation heat, a hot roller or exothermic reactions, for example, of the thermo-physical type caused by additives.

5) An important use is aimed at obtaining resilient surfaces of permanent porosity (for example, for sporting halls ) having a drastically increased resistance to expansion by trampling and a very high degree of playability even in wet weather. Natural grass may be used with an appropriate combination of drainage and absorption properties.

6) Binding of very fine powdery substances such as combustion dust, gypsum, sulphur, chalk into material better suitable for storage and transport, which may afterwards be worked up in a ground body by the method described, whilst in addition any leaching of substances considered to be noxious such as metal salts is avoided.

7) An important increase in strength and stiffness is obtained by rolling after the termination of the normal reinforcing process. There is produced a film-drawing effect providing increased strength in the direction of loading by preferenctial polymer chain orientation.

It should be noted that as a matter of course combinations of the above-mentioned methods may be em-ployed.

-1-

CLAIMS

1. A method of enhancing the load resistibility of ground material containing loose elements such as grains and/or fibres in which method a stabilizing agent is mixed with said material, characterized in that the stabilizing agent comprises cellulose derivatives in the dissolved state to form at least partly by curing a cell structure with walls of film-like stabilisation material and cells enclosing the loose elements.

2. A method as claimed in claim 1, characterized in that the finally resulting mixing ratio between the ground material and the cellulose derivatives is at least of the order of magnitude of 500 : 1.

3. A method as claimed in claim 1 or 2, characterized in that the layer formed is mechanically consolidated.

4. A method as claimed in anyone of the preceding claims, characterized in that substances accelerating the reinforcement are added to the cellulose derivatives.

5. A method as claimed in anyone of the preceding claims, characterized in that polymer structure forming substances are added to the cellulose derivatives.

6. A method as claimed in anyone of the preceding claims, characterized in that substances for enhancing the chemical and microbiological stability are added to the cellulose derivatives.

7. A method as claimed in claim 6, characterized in that the additives are of the three-dimensionally linking type.

8. A method as claimed in claim 7, characterized in that the additives are selected from the group comprizing cyanuric chloride, formaldehyde, derivatives of cyanuric chloride, isohydroxyl-ethylene, distyrene-triazine.

9. A method as claimed in anyone of the preceding claims, characterized in that the mixture of ground material and stabilizing material is applied by a process of the group comprising casting, pouring, spraying.

10. A method as claimed in anyone of claims 1 to 8, characterized in that the mixture of ground material and stabilizing agent is applied by an infiltration process using pressure difference.

11. A method as claimed in anyone of claims 1 to 8, characterized in that the mixture of ground material and stabilizing agent is injected into deeper, at least slightly porous layers of the soil.

12. A method as claimed in anyone of the preceding claims, characterized in that stiffening is accelerated by an increase in temperature.

13. A method as claimed in claim 12, characterized in that the temperature is increased to a maximum of about 40$^{\circ}$C.

14. A method as claimed in anyone of the preceding claims, characterized in that the mixing ratio of the various constituents is selected to obtain at least one of the following properties: a given moisture repelling power, a given draining or moisture absorbing

-3-

power, a given minimum of resilient depressability, a given resistance to corrosion of a surface layer by treading or riding.

15. A method as claimed in anyone of the preceding claims characterized in that subsequent to stiffening the mixture of ground material and stabilizing agent is at least temporarily exposed to a load, for example, by rolling to enhance the stiffness and the strength thereof by the preferential stretchin of polymer chains.

16. A method as claimed in anyone of claims 1 to 15, characterized in that the ground material comprises a very fine powdery substance and in that the particles thereof are caused by the stabilizing agent to cohere, for example, in the form of grains.

| | **DOCUMENTS CONSIDERED TO BE RELEVANT** | | | CLASSIFICATION OF THE APPLICATION (Int. Cl.³) |
|---|---|---|---|---|
| Category | Citation of document with indication, where appropriate, of relevant passages | | Relevant to claim | |
| | US - A - 3 919 849 (HESSERT) <br> * Column 1, lines 58-68; column 2, lines 1-5, 12-50, 64-68; column 5, lines 63-68; column 6, lines 1-3, 23-27 * <br><br> -- | | 1,12, 13,14 | C 09 K 17/00 |
| | US - A - 3 281 987 (SCOTT) <br> * Column 2, lines 17-71; column 3, lines 1,2 * <br><br> -- | | 1,8,12 | |
| | US - A - 2 543 868 (PROKOP) <br> * Column 2, lines 5-14, 22-28; column 5, lines 57-75 * <br><br> -- | | 1,9,10 11,12 | **TECHNICAL FIELDS SEARCHED (Int. Cl.³)** <br><br> C 09 K <br> E 02 D |
| | GB - A - 1 415 524 (HOLLANDSCHE WEGENBOUW ZANEN) <br> * Page 1, lines 21-50; page 3, lines 35-53 * <br><br> -- | | 9,12, 15 | |
| A | US - A - 2 802 303 (WECKS) <br><br> ---- | | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search <br> The Hague | Date of completion of the search <br> 12-05-1981 | Examiner <br> RUYMBEKE |

EPO Form 1503.1 06.78